# EUROPÄISCHE PATENTANMELDUNG

(11) **EP 1 935 914 A1**
(43) Veröffentlichungstag der Anmeldung: **25.06.2008**
(21) Anmeldenummer: 06127080.7
(22) Anmeldetag: 22.12.2006
(51) Int. Cl.: C08G 59/12, C08G 59/22, C08C 19/36, C08G 65/26

(54) **Hydroxyester-vorverlängerte Epoxidgruppen terminierte Zähigkeitsverbesserer und Verfahren zu deren Herstellung**

(71) Anmelder: Sika Technology AG, 6340 Baar (CH)
(72) Erfinder: Die Erfindernennung liegt noch nicht vor
(74) Vertreter: Sika Patent Attorneys

(57) **Zusammenfassung**

Die vorliegende Erfindung betrifft Zähigkeitsverbesserer. Es werden funktionelle Endgruppen aufweisende terminierte Polymere vorgestellt, welche durch Polyepoxide vorverlängert werden und durch eine weitere Reaktion zu Polymeren mit anderen funktionellen Gruppen terminiert werden. Die Zähigkeitsverbesserer zeichnen sich durch einen geringen Gehalt an die Eigenschaften von Zusammensetzungen verschlechterten Edukten oder Edukt-Folgeprodukte aus und dadurch, dass die Bildung von höhermolekularen Additionsprodukte stark verringert bis ausgeschlossen wird, so dass sehr geringe Viskositäten bei guter Lagerstabilität entstehen. Als besonders bevorzugt gilt das Epoxidgruppen-terminierte Polymer der Formel (I).

## Beschreibung

### Technisches Gebiet

Die Erfindung betrifft das Gebiet der Zähigkeitsverbesserer.

### Stand der Technik

Polymere werden seit langem als Werkstoffe eingesetzt. Gewisse Polymere weisen jedoch das Problem auf, dass bei schlagartiger Schlagbeanspruchung die Polymermatrix bricht, d.h. dass ihre Schlagzähigkeit gering ist. Insbesondere Polymermatrices basierend auf Epoxidharzen sind zwar sehr fest sind aber vielfach nicht sehr schlagzäh. Deshalb wurde schon länger versucht, die Schlagzähigkeit zu verbessern.

Dies wurde beispielsweise mit der Verwendung von speziellen Copolymeren, welche als sogenannte Flüssigkautschuke bezeichnet werden, schon seit längerem versucht. Durch die Verwendung von chemisch reaktiven Gruppen, wie Hydroxyl-, Carboxyl-, Vinyl- oder Amino-Gruppen sind derartige Flüssigkautschuke chemisch in die Matrix einbaubar. So existieren beispielsweise seit langem reaktive Flüssigkautschuke Butadien/Acrylonitil-Copolymere, welche mit Hydroxyl-, Carboxyl-, Vinyl- oder Amino-Gruppen terminiert sind, welche von der Firma B.F. Goodrich, beziehungsweise Noveon, unter dem Handelsnamen Hycar® angeboten. Als Ausgangsbasis wird hierfür stets das Carboxylgruppen-terminierte Butadien/Acrylonitil-Copolymer verwendet, zu welchem üblicherweise ein starker Überschuss an einem Diamin, Diepoxid oder ein Glycidyl(meth)acrylat zugesetzt wird. Dies führt jedoch dazu, dass sich einerseits eine hohe Viskosität bildet oder andererseits dass ein sehr hoher Gehalt an unumgesetztem Diamin, Diepoxid oder Glycidyl(meth)acrylat, welches entweder aufwändig entfernt werden muss oder aber die mechanischen Eigenschaften stark negativ beeinflusst.

Es besteht jedoch vielfach der Wunsch noch weiter erhöhte Schlagzähigkeit zu erhalten und eine breitere Vielfalt an Zähigkeitsverbesserern zu haben. Eine derartige Möglichkeit in diese Richtung besteht in der Kettenverlängerung von Epoxidgruppen-terminierten Polymeren durch Bisphenole oder durch die Verwendung höher molekularer Epoxidharzen bei der Herstellung. Auch hier entstehen je nach Reaktionsführung grosse Mengen an unumgesetzten Bisphenolen oder an verlängerten Epoxidharzen, die beide schnell die Eigenschaften von Zusammensetzungen negativ beeinflussen können. Weiterhin sind derartige Addukte schnell nicht mehr flüssig, wodurch derartige Zähigkeitsverbesserer enthaltende Zusammensetzungen konsequenterweise vielfach nicht mehr prozesssicher appliziert werden können. Zudem führt die Verwendung von Bisphenolen zu verringerter Lagerstabilität.

### Darstellung der Erfindung

Aufgabe der vorliegenden Erfindung ist es daher, Zähigkeitsverbesserer mit funktionellen Endgruppen zur Verfügung zustellen, welche in der Lage sind, die Probleme des Standes der Technik zu beheben. Die Polymere gemäss der Ansprüche 1, 11, 13 und 14 stellen derartige Polymere zur Verfügung. Sie lassen sich alle aus einem Carboxylgruppen-terminierten Polymer gemäss Anspruch 11 herstellen, welches seinerseits aus einem leicht zugänglichen Carboxylgruppen-terminierten Butadien/Acrylonitril-Copolymer erhalten werden kann. Durch die Möglichkeiten, die sich aus den unterschiedlichen Molekülen zur Vorverlängerung und Terminierung ergeben, ist eine breite Palette von unterschiedlichen Zähigkeitsverbesserer möglich, und lässt sich auf die Bedürfnisse hin massschneidern. Die mit funktionellen Gruppen terminierten Polymere haben den grossen Vorteil, dass sie eine enge Molekulargewichtsverteilung sowie einen sehr hohen Anteil an als Zähigkeitsverbesserer geeigneten Molekülen aufweisen.

Dieser Vorteil entsteht insbesondere durch das Verfahren der Herstellung des Carboxylgruppen-terminierten Polymers gemäss Anspruch 11, welches als Ausgangspunkt für die Herstellung der Polymere gemäss Anspruch 1, 13 und 14 dienen und insbesondere durch das zwei Schritte umfassende Verfahren zur Herstellung eines Endgruppen-terminierten Polymers gemäss Anspruch 17. Bei diesem Verfahren gemäss Anspruch 15 ist gewährleistet, dass als allenfalls unumgesetzte Edukte lediglich bereits als Zähigkeitsverbesserer wirkende Substanzen vorhanden sind, welche bei einem allenfalls weiter zu Polymer gemäss Anspruch 1, 13 oder 14 führenden Reaktionsschritt ebenfalls zu reaktiven Zähigkeitsverbesserern reagieren. Somit werden keine oder nur unwesentliche Mengen an die Mechanik negativ beeinflussenden Verbindungen gebildet, so dass äusserst potente Zähigkeitsverbesserer zur Verfügung gestellt werden können. Trotz der vielen Möglichkeiten, die sich aus Vorverlängerung und Epoxidterminierung ergeben, sind die Polymere erstaunlich niederviskos.

Die Polymere gemäss Anspruch 1, 11, 13 und 14 lassen sich breit als Mittel zur Erhöhung der Schlagzähigkeit einer Polymermatrix gemäss Anspruch 18 verwenden. Besonders bevorzugt ist deren Einsatz in Epoxidharzmatrix.

Weitere Aspekte der Erfindung betreffen Polymere gemäss Anspruch 1, 11, 13 oder 14 enthaltende Zusammensetzungen sowie ausgehärtete Zusammensetzungen gemäss Anspruch 24 und 25.

Besonders bevorzugt werden derartige Polymere in Klebstoffen, insbesondere hitzehärtende Epoxidharzklebstoffen, eingesetzt. Sie weisen ausserordentlich gute Schlagzähigkeiten auf.

Bevorzugte Ausführungen der Erfindung sind Gegenstand der abhängigen Ansprüche.

### Wege zur Ausführung der Erfindung

Die vorliegende Erfindung betrifft in einem ersten Aspekt Epoxidgruppen-terminiertes Polymer der Formel (I).

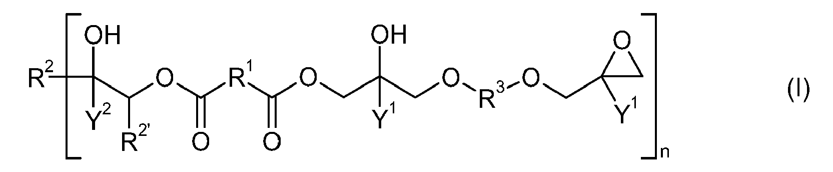

Hierbei steht R¹ für einen divalenten Rest eines Carboxylgruppen-terminierten Butadien/Acrylonitril-Copolymers CTBN nach Entfernung der terminalen Carboxylgruppen. Weiterhin steht R² für ein Polyepoxid **PEP** nach Entfernung von n Epoxid-Gruppen und R^{2'} für H oder für einen mit R² verbundenen Rest. Weiterhin stehen Y¹ und Y² unabhängig voneinander für H oder Methyl. R³ steht für einen Diglycidylether **DGE** nach Entfernung der zwei Glycidylether-Gruppen. Schliesslich steht n für einen Wert von 2 bis 4, insbesondere von 2

Insbesondere steht R¹ für einen Rest, wie er durch formelle Entfernung der Carboxyl-Gruppen eines unter dem Namen Hycar® CTBN von Noveon kommerziell vertriebenen Carboxylgruppen-terminierten Butadien/Acrylonitril-Copolymers **CTBN,** erhalten wird. Bevorzugt weist er eine Struktur der Formel (IV) auf.

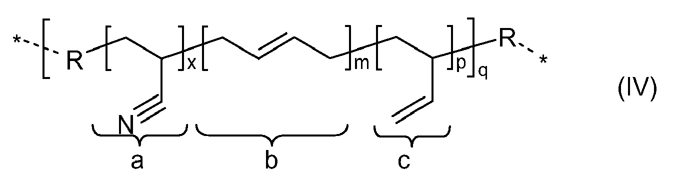

Hierbei stellen die gestrichelten Linien die Anbindungsstellen der zwei Carboxylgruppen dar. R steht für einen linearen oder verzweigten Alkylenrest mit 1 bis 6 C-Atomen, insbesondere mit 4 C-Atomen, welcher gegebenenfalls mit ungesättigten Gruppen substituiert ist. In einer besonders zu erwähnende Ausführungsform stellt der Substituent R einen Substituenten der Formel (VII) dar, wobei auch hier die gestrichelten Linien die Anbindungsstellen darstellen

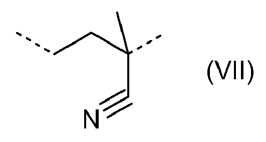

Weiterhin steht der Index q für einen Wert zwischen 40 und 100, insbesondere zwischen 50 und 90. Weiterhin stellen die Bezeichnungen b und c die Strukturelemente, welche von Butadien stammen und a das Strukturelement, welches von Acrylonitril stammt, dar. Die Indices x, m, und p stellen ihrerseits Werte dar, die das Verhältnis der Strukturelement a, b und c zueinander beschreiben. Der Index x steht für Werte von 0.05 - 0.3, der Index m für Werten von 0.5 - 0.8, der Index p für Werte von 0.1 - 0.2 mit der Voraussetzung, dass die Summe von x, m und p gleich 1 ist.

Dem Fachmann ist klar, dass die in Formel (IV), wie auch die im Weiteren in Formeln (VI"') und (V"') gezeigten Strukturen als vereinfachte Darstellungen zu verstehen sind. Somit können die Bausteine a, b und c, bzw. d und e oder d' und e', jeweils zufällig, abwechselnd oder blockweise zueinander angeordnet sein. Insbesondere stellt somit Formel (IV) nicht zwangsläufig ein Triblock-Copolymer dar.

Der Rest R² steht für ein Polyepoxid **PEP** nach Entfernung von n Epoxid-Gruppen. Als Epoxid-Gruppe wird ein Strukturelement eines Epoxiran-Ringes ( 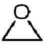 ) verstanden. Besonders bevorzugte Epoxid-Gruppen sind Glycidylether-Gruppen 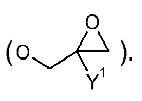 Als "Glycidylether-Gruppe" wird neben dem Fall, in dem Y¹ in der letzten Formel für H steht, der Einfachheit halber im vorliegenden Dokument auch diejenige Gruppe der letzten Formel bezeichnet, in welcher Y¹ für Methyl steht.

Polyepoxide können auf bekannte Art und Weise zum Beispiel aus der Oxidation von den entsprechenden Olefinen oder aus der Reaktion von Epichlorhydrin mit den entsprechenden Polyolen hergestellt werden.

Es handelt sich beim Polyepoxid **PEP** um ein Diepoxid, Triepoxid oder Tetraepoxid, insbesondere um ein Diglycidylether, Triglycidylether oder Tetraglycidylether. Derartige Polyepoxide, bzw. Polyglycidylether, sind dem Fachmann bekannt einerseits als Epoxid-Reaktivverdünner als auch als Epoxidharze.

In einer Ausführungsform ist das Polyepoxid **PEP** ein aliphatischer oder cycloaliphatischer Polyglycidylether, bevorzugt ein aliphatischer oder cycloaliphatischer Diglycidylether, wie
- Glycidylether von difunktionellen gesättigten oder ungesättigten, verzweigten oder unverzweigten, zyklischen oder offenkettigen C₂ - C₃₀ Alkoholen, z.B. Ethylenglykol-, Butandiol-, Hexandiol-, Oktandioldigylcidylether, Cyclohexandimethanoldigylcidylether, Neopentylglycoldiglycidylether etc.
- Glycidylether von tri- oder tetrafunktionellen, gesättigten oder ungesättigten, verzweigten oder unverzweigten, zyklischen oder offenkettigen Alkoholen wie epoxidiertes Rhizinusöl, epoxidiertes Trimethylolpropan, epoxidiertes Pentaerythrol oder Polyglycidylether von aliphatischen Polyolen wie Glycerin, Trimethylolpropan etc.
- Epoxidierte Dicarbonsäuren wie Phthalsäure-, Tetra- und Hexahydrophthalsäurediglycidylester, Diglycidylester von dimeren Fettsäuren etc.

Insbesondere handelt es sich beim aliphatischen oder cycloaliphatischen Diglycidylether um einen Diglycidylether der Formel (V") oder (V''').

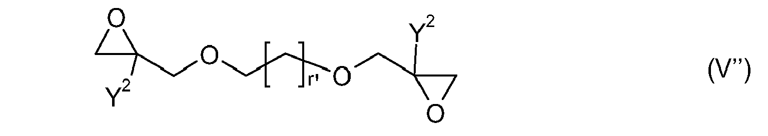

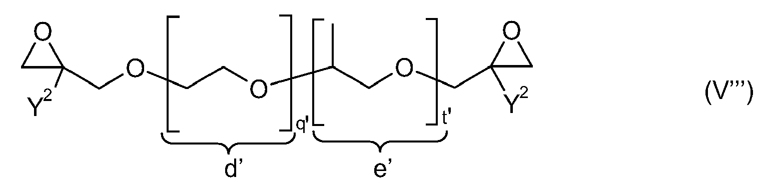

Hierbei steht r' für einen Wert von 1 bis 9, insbesondere für 3 oder 5. Zudem steht q' für einen Wert von 0 bis 10 und t' für einen Wert von 0 bis 10, mit der Massgabe, dass die Summe von q' und t' ≥ 1 ist. Schliesslich stellt d' das Strukturelement dar, welches von Ethylenoxid stammt, und e' stellt das Strukturelement dar, welches von Propylenoxid stammt. Es handelt sich somit bei Formel (V''') um (Poly)ethylenglycoldiglycidylether, (Poly)propylenglycoldiglycidylether und (Poly)ethylenglycol/propylenglycol-diglycidylether, wobei die Bausteine d' und e' blockartig, abwechselnd oder zufällig angeordnet sein können.

Besonders geeignete aliphatische oder cycloaliphatische Diglycidylether sind Ethylenglykoldiglycidylether, Butandioldiglycidylether oder Hexandioldiglycidylether.

In einer weiteren Ausführungsform ist das Polyepoxid **PEP** ein Polyepoxid, welches aus einer Oxidation von Olefinen hergestellt wurde.

Bevorzugte Beispiele für derartige Polyepoxide **PEP** sind solche, welche mindestens eine Epoxidgruppe aufweisen, welche über Oxidation einer Cyclohexenyl- oder Cyclohexenylen-Gruppe hergestellt werden.

Bevorzugte derartige Polyepoxide **PEP** sind 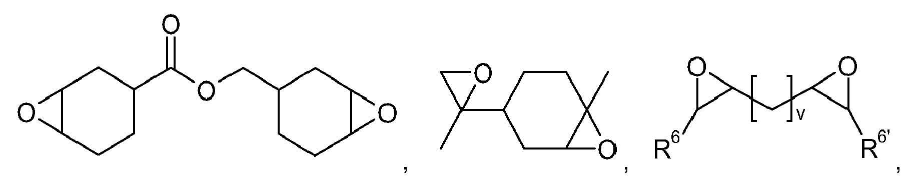 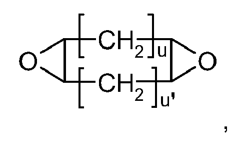 sowie Polyester von Polycarbonsäuren und 3,4-Epoxycyclohexylmethylalkohol, insbesondere Bis(3,4-Epoxycyclohexylmethyl)adipat. Hierbei steht v für einen Wert von 2 bis 8 und R⁶ und R⁶' unabhängig voneinander für H oder einen C₁-C₆-Alkylrest. Die Indices u und u' stehen für Werte von 0 bis 5, insbesondere von 1 bis 5, mit der Massgabe, dass u +u' ≥ 1, insbesondere u +u' ≥ 2, ist. Als besonders geeignet gelten sind 3,4-Epoxycyclohexylmethyl-3,4-Epoxycyclohexancarboxylat, Bis(3,4-Epoxycyclohexylmethyl)adipat, 1,2,7,8-Diepoxyoktan, 1,2,3,4-Diepoxybutan sowie 1,2,5,6-Diepoxycyclooktan.

In einer weiteren Ausführungsform ist das Polyepoxid **PEP** ein aromatischer Diglycidylether. Diese sind einerseits sogenannte epoxidierte Novolake und andererseits aromatische Diglycidylether, welche nach Entfernung von zwei Glycidylether-Gruppen einen Resten R² der Formel (V') aufweisen.

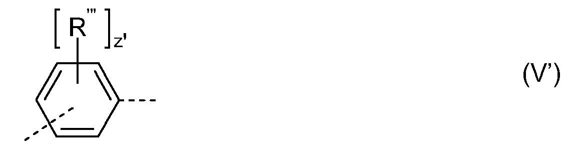

Hierbei steht R''' unabhängig von einander für H, Methyl oder Ethyl und z' für 0 oder 1. Es handelt sich somit um o-Phenylen, m-Phenylen, p-Phenylen, sowie deren mit Methyl- oder Ethylgruppen ringsubstituierten abgeleiteten Strukturen.

In einer weiteren Ausführungsform ist das Polyepoxid **PEP** ein Epoxidharz. Das Epoxidharz kann ein sogenanntes Epoxid-Flüssigharz oder ein Epoxid-Festharz sein.

Der Begriff "Epoxid-Festharz" ist dem Epoxid-Fachmann bestens bekannt und wird im Gegensatz zu "Epoxid-Flüssigharzen" verwendet. Die Glasübergangstemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (VIII) auf

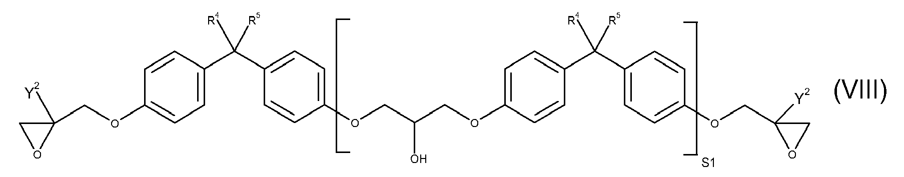

Hierbei stehen die Substituenten R⁴, R⁵ und Y² unabhängig voneinander entweder für H oder CH₃. Weiterhin steht der Index S1 für einen Wert von > 1.5, insbesondere von 2 bis 12.

In diesem Dokument ist die Verwendung des Terms "unabhängig voneinander" in Zusammenhang mit Substituenten, Resten oder Gruppen dahingehend auszulegen, dass im selben Molekül die gleich bezeichneten Substituenten, Reste oder Gruppen gleichzeitig mit unterschiedlicher Bedeutung auftreten können.

Derartige Epoxid-Festharze sind kommerziell erhältlich beispielsweise von Dow oder Huntsman oder Hexion.

Verbindungen der Formel (VIII) mit einem Index S1 zwischen 1 und 1.5 werden vom Fachmann als Semisolid-Epoxidharze bezeichnet. Für die hier vorliegende Erfindung werden sie ebenfalls als Festharze betrachtet. Bevorzugt Epoxid-Festharze sind jedoch Epoxid-Festharze im engeren Sinn, d.h. der Index S1 weist einen Wert von > 1.5 auf.

Bevorzugte Epoxid-Flüssigharze weisen die Formel (IX) auf

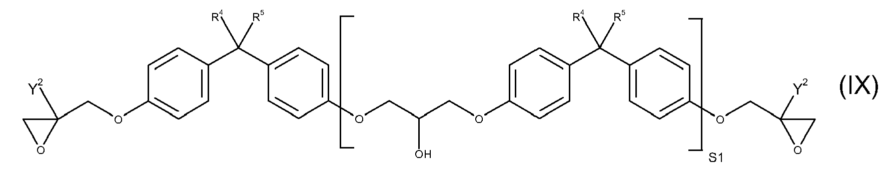

Hierbei stehen die Substituenten R⁴, R⁵ und Y² unabhängig voneinander entweder für H oder CH₃. Weiterhin steht der Index S1 für einen Wert von 0 bis 1. Bevorzugt steht S1 für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung "A/F" verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Somit stellt der Rest R² in einer besonders geeigneten Form die Formel (V) oder (V') dar.

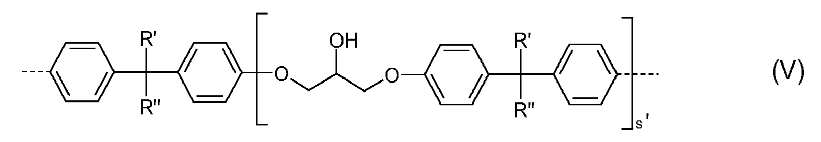

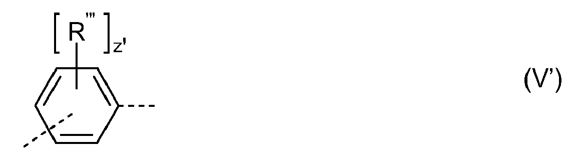

Hierbei stehen R', R" und R"' unabhängig voneinander für H, Methyl oder Ethyl, z' für 0 oder 1 und s' für 0 oder für einen Wert von 0.1 - 12.

Ein besonders bevorzugtes Polyepoxid **PEP** ist Bisphenol-A-Diglycidylether.

Der Rest R³ steht für einen Diglycidylether **DGE** nach Entfernung der zwei Glycidylether-Gruppen. Die Möglichkeiten für den Diglycidylether **DGE** entsprechen grundsätzlich denjenigen der bereits als Diglycidylether aufgeführten Polyepoxide **PEP.**

Insbesondere ist der Diglycidylether **DGE** ein aliphatischer oder cycloaliphatischer Diglycidylether, insbesondere ein Diglycidylether der Formel (VI") oder (VI"').

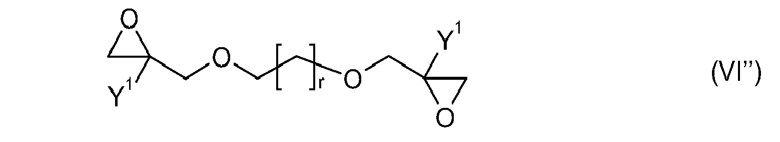

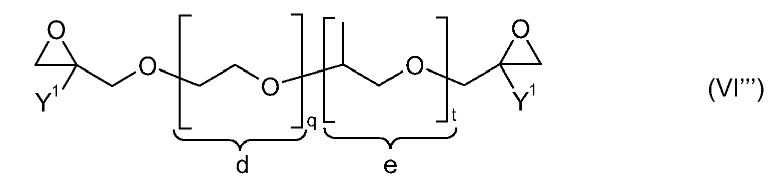

Hierbei steht r für einen Wert von 1 bis 9, insbesondere für 3 oder 5. Zudem steht q für einen Wert von 0 bis 10 und t für einen Wert von 0 bis 10, mit der Massgabe, dass die Summe von q und t ≥ 1 ist. Schliesslich stellt d das Strukturelement dar, welches von Ethylenoxid stammt, und e stellt das Strukturelement dar, welches von Propylenoxid stammt. Es handelt sich somit bei Formel (VI"') um (Poly)ethylenglycoldiglycidylether, (Poly)propylenglycoldiglycidylether und (Poly)ethylenglycol/propylenglycol-diglycidylether, wobei die Bausteine d und e blockartig, abwechselnd oder zufällig angeordnet sein können.

Besonders geeignete aliphatische oder cycloaliphatische Diglycidylether sind Ethylenglykoldiglycidylether, Butandioldiglycidylether oder Hexandioldiglycidylether.

In einer weiteren besonders geeigneten Ausführungsform ist der Diglycidylether **DGE** ein Diglycidylether, welcher nach Entfernung der zwei Glycidylether-Gruppen, entsprechend dem Rest R³, die Formel (VI) oder (VI') aufweist.

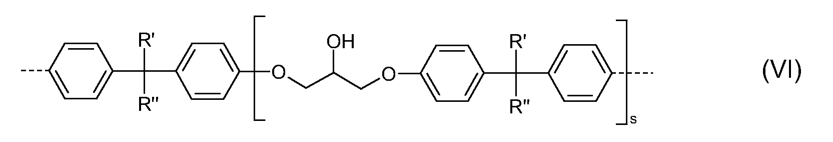

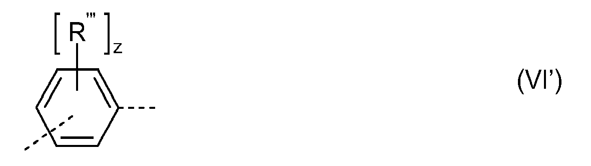

Hierbei stehen R', R" und R'" unabhängig voneinander für H, Methyl oder Ethyl, z für 0 oder 1 und s für 0 oder für einen Wert von 0.1 - 12.

Ein besonders bevorzugter Diglycidylether **DGE** ist Bisphenol-F-Diglycidylether.

Das Epoxidgruppen-terminiertes Polymer der Formel (I) lässt sich wie folgt herstellen:

In einem ersten Schritt ("Vorverlängerung") wird aus einem Carboxylgruppen-terminierten Butadien/Acrylonitril-Copolymer **CTBN** der Formel HOOC-R¹-COOH und einem Polyepoxid **PEP** in einem stöchiometrischen Überschuss (n' ≥ n) des HOOC-R¹-COOH ein Carboxylgruppen-terminiertes Polymer der Formel (II) hergestellt:

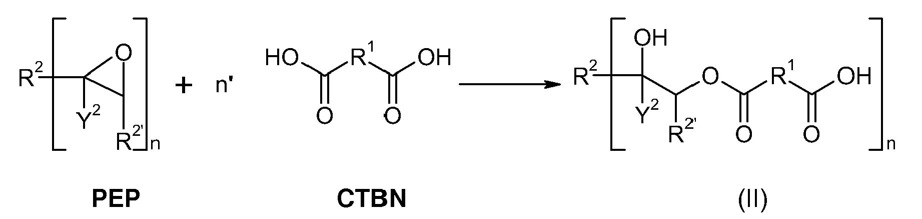

Für diese Umsetzung werden Polyepoxid **PEP** und HOOC-R¹-COOH so in einer Menge eingesetzt, dass das stöchiometrischen Verhältnis der COOH-Gruppen zu Epoxid-Gruppen [COOH] / [ 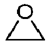 ] ≥ 2 ist.

Ist dieses Verhältnis = 2, entsprechend n' = n, ist der Anteil von höher molekularen Spezies tendenziell erhöht, was zu stark erhöhten Viskositäten im Carboxylgruppen-terminierten Polymer der Formel (II), bzw. im Epoxidgruppen-terminierten Polymer der Formel (I), führen kann, was unter Umständen Anlass zu Problemen geben kann. Bei einem Verhältnis von < 2 (entsprechend n'<n), insbesondere von «2, wird dieses Problem sehr stark vergrössert. Deshalb ist bei diesem Verhältnis ein Wert von >2 bevorzugt. Typischerweise ist ein Verhältnis von > 4, vor allem » 2, entsprechend n' » n, sehr bevorzugt. In diesen Fällen weist die Reaktionsmischung einen relativ grossen Gehalt an unumgesetzten HOOC-R¹-COOH auf. Dies ist jedoch nicht weiter störend, wie nachfolgend diskutiert wird.

Es ist dem Fachmann klar, dass auch Mischungen von Polyepoxiden **PEP** und/oder Carboxylgruppen-terminierten Butadien/Acrylonitril-Copolymeren **CTBN** der Formel HOOC-R¹-COOH eingesetzt werden können.

In einem zweiten Schritt ("Terminierung") wird aus dem Carboxylgruppen-terminierten Polymer der Formel (II) und einem Diglycidylether **DGE** der Formel (III) in einem stöchiometrischen Überschuss (n" ≥ n) des Diglycidylether **DGE** ein Epoxidgruppen-terminiertes Polymer der Formel (I) hergestellt:

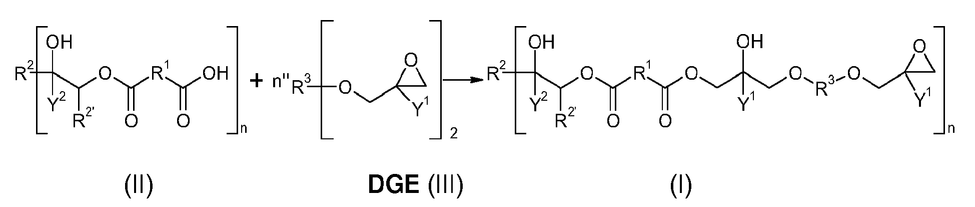

Für diese Umsetzung werden das Polymer der Formel (II) und der Diglycidylether der Formel (III) in einer solchen Menge zueinander eingesetzt, dass das stöchiometrischen Verhältnis der Glycidylether-Gruppen zu COOH-Gruppen 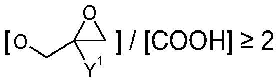 ist.

Ist dieses Verhältnis = 2, entsprechend n" = n, ist der Anteil von höher molekularen Spezies erhöht, was zu stark erhöhten Viskositäten im Epoxid-gruppen-terminierten Polymer der Formel (I), führen kann, was unter Umständen Anlass zu Problemen geben kann. Bei einem Verhältnis von < 2 (entsprechend n'<n), insbesondere von «2, wird dieses Problem sehr stark vergrössert. Deshalb ist bei diesem Verhältnis ein Wert von >2 bevorzugt. Typischerweise ist ein Verhältnis von > 4, vor allem » 2, entsprechend n" » n, sehr bevorzugt.

Falls in der Edukt-Mischung am Anfang dieses zweiten Schrittes noch aus dem ersten Schritt unumgesetztes Carboxylgruppen-terminiertes Butadien/Acrylonitril-Copolymer CTBN HOOC-R¹-COOH vorhanden ist, wird dieses im zweiten Schritt zu einem Epoxid-Gruppen terminierten Polymer der aus dem Stand der Technik bekannten Formel (X) reagiert.

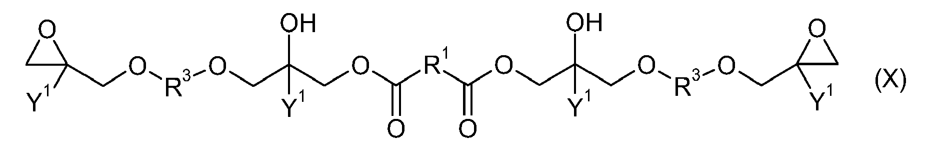

Auf diese Art und Weise kann gewährleistet werden, dass möglichst viele Epoxidgruppen-terminierte Polymere, welche als Schlagzähigkeitsmodifikatoren verwendet werden können, in der Schlussmischung vorhanden sind. Insbesondere wird entgegen dem Verfahren aus dem Stand der Technik verhindert, dass eine grosse Molekulargewichtsverteilung vorhanden ist, was zu einer Verschlechterung der Applikationseigenschafen, insbesondere einer hohen Viskosität, führt.

Es ist dem Fachmann klar, dass auch Mischungen von Carboxylgruppen-terminierten Polymeren der Formel (II) und/oder Diglycidylethern **DGE** der Formel (III) eingesetzt werden können. In einer derartigen Herstellungsweise entstehen in situ Mischungen von Epoxidgruppen-terminierte Polymeren der Formel (I).

In beiden Schritten erfolgt eine Esterbildung. Derartige Umsetzungen von Epoxiden, bzw. Glycidylethern mit Carbonsäuren sind dem Fachmann bekannt sowie die Reaktionsbedingungen hierfür. Insbesondere werden höhere Temperaturen, typischerweise bei Temperaturen von 100°C, bevorzugt um 140°C, und gegebenenfalls Katalysatoren eingesetzt und vorzugsweise unter Schutzgas. Beispiele für derartige Katalysatoren sind Triphenylphosphin, tertiäre Amine, quaternäre Phosphoniumsalze oder quaternäre Ammoniumsalze.

Somit bilden Carboxylgruppen-terminierte Polymere der Formel (II) einen weiteren Aspekt der vorliegenden Erfindung. Die Definition, Möglichkeiten und bevorzugten Ausführungsformen der in dieser Formel (II) aufgeführten Reste und Indizes entsprechen denjenigen, wie sie in diesem Dokument bereits vorgängig für Epoxidgruppen-terminiertes Polymer der Formel (I) detailliert beschrieben wurden.

Einen weiteren Aspekt der vorliegenden Erfindung bildet ein Verfahren zur Herstellung eines Carboxylgruppen-terminierten Polymers der Formel (II) durch eine Umsetzung eines Polyepoxides **PEP** mit einem Carboxylgruppen-terminierten Butadien/Acrylonitril-Copolymer **CTBN** der Formel HOOC-R¹-COOH, dadurch gekennzeichnet, dass für diese Umsetzung das Polyepoxid **PEP** und HOOC-R¹-COOH in einer Menge zueinander eingesetzt werden, das einem stöchiometrischen Verhältnis der COOH-Gruppen zu Epoxid-Gruppen [COOH] / [ 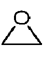 ] von ≥ 2 entspricht. Dieses Verfahren wurde im Detail bereits vorgängig in diesem Dokument beschrieben.

Einen weiteren Aspekt der vorliegenden Erfindung bildet ein Verfahren zur Herstellung eines Epoxidgruppen-terminiertes Polymers der Formel (I) durch die Umsetzung eines Carboxylgruppen-terminierten Polymers der Formel (II) mit einem Diglycidylether **DGE** der Formel (III), dadurch gekennzeichnet, dass für diese Umsetzung das Polymer der Formel (II) und der Diglycidylether der Formel (III) in einer Menge zueinander eingesetzt werden, das einem stöchiometrischen Verhältnis der Glycidylethergruppen zu COOH-Gruppen 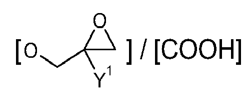 von ≥ 2 entspricht.

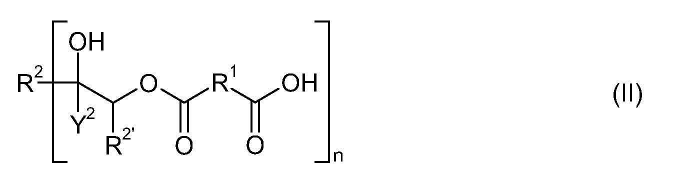

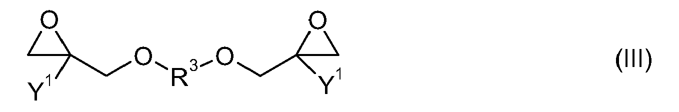

Dieses Verfahren wurde im Detail bereits vorgängig in diesem Dokument beschrieben.

Es ist dem Fachmann klar, dass die Epoxidgruppen-terminierten Polymere der Formel (I) weiter reagiert werden können. So ist insbesondere die Verlängerung mittels Polyphenolen, insbesondere mittel Bisphenolen, wie Bisphenol-A, unter Umständen sehr hilfreich, um noch höher molekularere Epoxidgruppen-terminierte Polymere oder Phenol-terminierte Polymere zu erhalten, wie sie beispielsweise in den folgenden Formel (XIII) und (XIV) wiedergegeben sind:

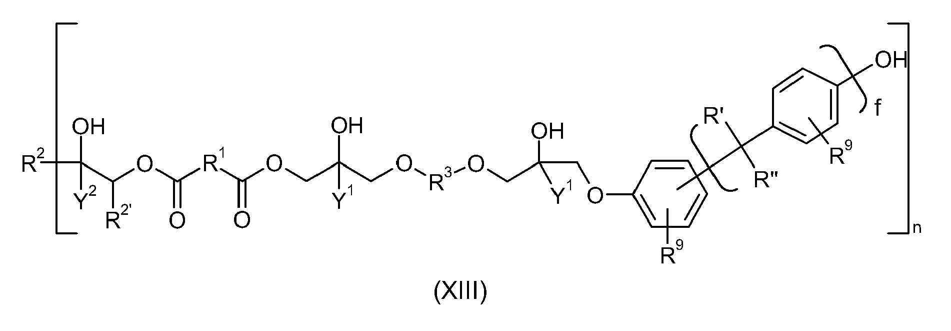

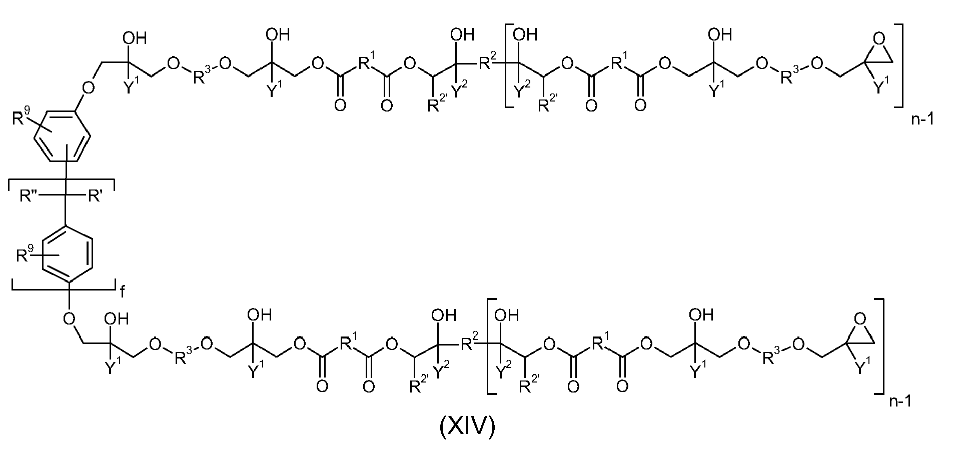

Hierbei steht der Index f für 0 oder 1. R⁹ steht hierbei für H oder einen Alkyl- oder Alkenylresten, insbesondere für einen Allylrest.

Weitere Aspekte sind Umsetzungsprodukte aus dem Carboxylgruppen-terminierte Polymer der Formel (II) mit Diaminen oder (Meth)acrylat-funktionellen Alkoholen oder Glycidylether-funktionellen (Meth)acrylaten, welche insbesondere zu Amingruppen-terminierten Polymeren der Formel (XI) (XI') und (XI"), bzw. zu (Meth)acrylatgruppen-terminierten Polymeren der Formel (XII) und (XII') gemäss dem folgenden beispielhaften Reaktionsschema, führen.

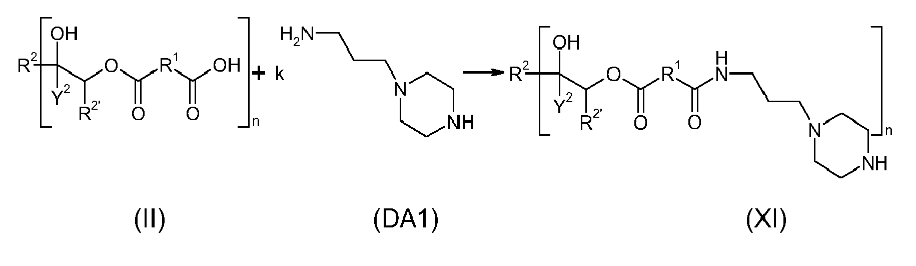

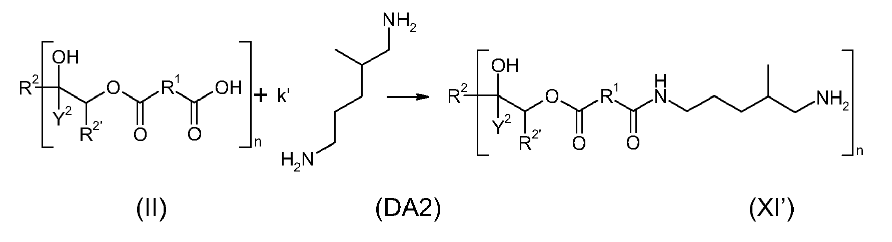

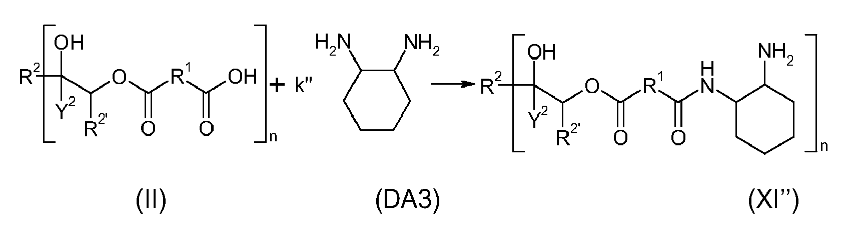

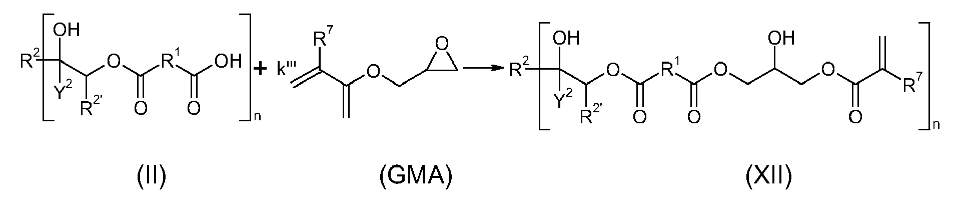

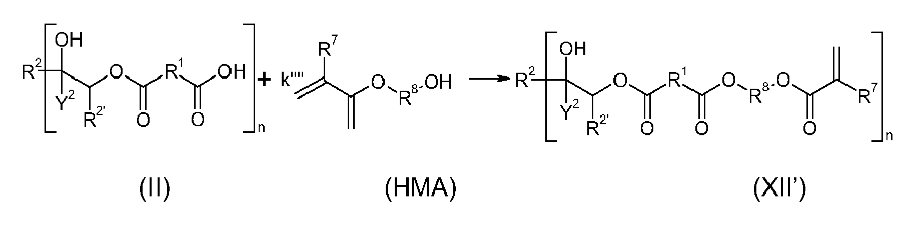

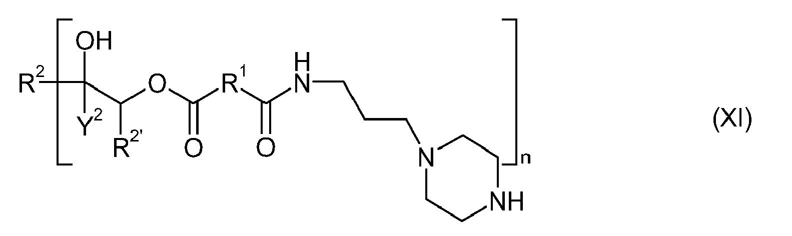

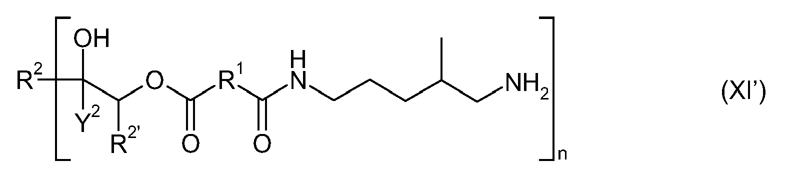

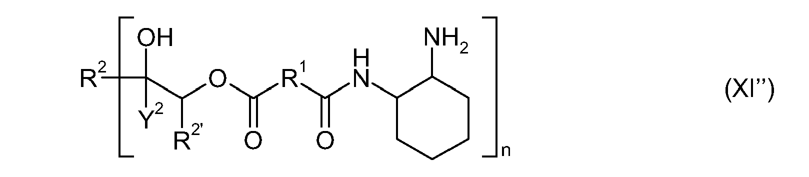

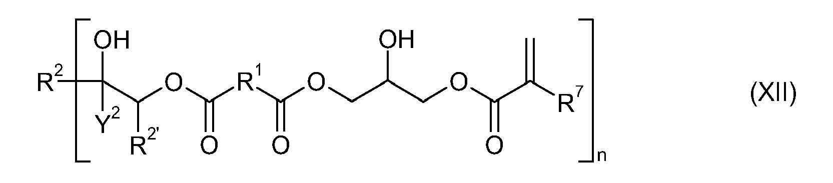

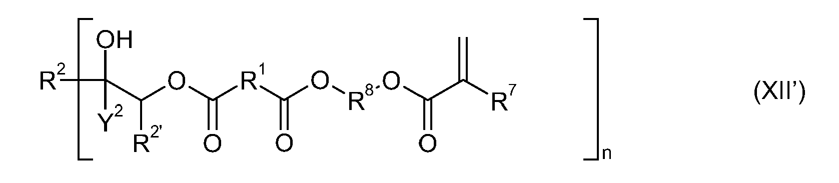

Hierbei steht R⁷ für H oder Methyl und R⁸ steht für einen divalenten Rest, insbesondere für einen Alkylen-, Cycloalkylen- oder (Poly)oxyalkylen-Rest. Die Diamine 1-(2-Aminoethyl)piperazin (DA1), bzw. 2-Methylpentamethylendiamin (DA2), bzw. 1,2-Diaminocyclohexan (DA3), sowie das Glycidyl(meth)acrylat (GMA) und das Hydroxy-funktionelle (Meth)acrylat (HMA) werden jeweils im stöchiometrischen Überschuss verwendet, d.h. k, k', k", k"' und k"" sind jeweils grösser als n.

Die Reaktionsbedingungen zur Bildung von Amiden und Estern sind aus der Literatur bekannt und können auf die Synthese dieser Umsetzungsprodukte, insbesondere der Polymere der Formel (XI), (XI'), (XI"), (XII) und (XII'), übertragen werden.

Somit bildet ein weiterer Aspekt der vorliegenden Erfindung ein Verfahren zur Herstellung eines Endgruppen-terminierten Polymers der Formel (XV), 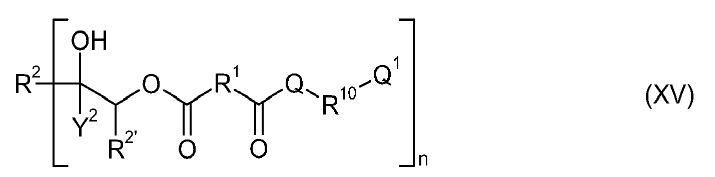 welches die folgenden zwei Schritte umfasst:
a) Vorverlängerung, d.h. Umsetzung eines Polyepoxides **PEP** mit einem stöchiometrischen Überschuss eines Carboxylgruppen-terminierten Butadien/Acrylonitril-Copolymers **CTBN** der Formel HOOC-R¹-COOH zu einem Carboxylgruppen terminierten Polymer der Formel (II), wie vorgängig bereits beschrieben, derart, dass das Polyepoxid **PEP** und HOOC-R¹-COOH in einer Menge zueinander eingesetzt werden, dass das Verhältnis der COOH-Gruppen zu Epoxid-Gruppen [COOH] / [ 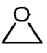 ] ≥ 2 ist;
   wobei das Polyepoxid **PEP** und das Carboxylgruppen-terminierten Butadien/Acrylonitril-Copolymers **CTBN** der Formel HOOC-R¹-COOH wie vorgängig bereits beschrieben wurde, zu wählen sind;
b) Terminierung, d.h. Umsetzung eines Carboxylgruppen-terminierten Polymers der Formel (II) mit einem Diglycidylether oder mit einem Diamin oder mit einem (Meth)acrylat-funktionellen Alkohol oder mit einem Glycidylether-funktionellen (Meth)acrylat derart, dass der Diglycidylether oder das Diamin oder der (Meth)acrylat-funktionelle Alkohol oder das Glycidylether-funktionelle (Meth)acrylat und das Carboxylgruppen-terminierte Polymers der Formel (II) in einer Menge entsprechend einem Molekül Diglycidylether oder Diamin oder (Meth)acrylat-funktioneller Alkohol oder Glycidylether-funktionelles (Meth)acrylat pro COOH-Gruppe eines Moleküls Carboxyl-gruppen-terminierten Polymers der Formel (II) zueinander eingesetzt werden.

Hierbei stehen in Formel (XV) R¹⁰ für einen divalenten Rest steht und Q¹ eine Endgruppe ist, welche ausgewählt ist aus der Gruppe bestehend aus der Formel (XVI), (XVI'), (XVI") und -NH₂.

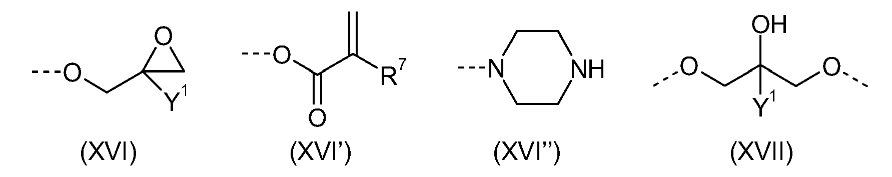

Es gilt die Massgabe, dass
Q für -NH- steht für den Fall,
in dem Q¹ für -NH₂ oder die Formel (XVI") steht, und
Q für -O- oder die Formel (XVII) steht für den Fall,
in dem Q¹ für die Formel (XVI') steht, und
Q für die Formel (XVII) steht für den Fall,
in dem Q¹ für die Formel (XVI) steht.

Als Endgruppen-terminierten Polymere der Formel (XV) gelten insbesondere die vorgängig beschriebenen Epoxidgruppen-terminierten Polymere der Formel (I), Carboxylgruppen-terminierten Polymere der Formel (II), Amingruppen-terminierten Polymere der Formel (XI), (XI') oder (XI") und (Meth)acrylatgruppen-terminierten Polymere der Formel (XII) oder (XII').

Die so hergestellten Carboxylgruppen-terminierten Polymere der Formel (II) und beschriebenen Endgruppen-terminierten Polymere der Formel (XV), insbesondere die Epoxidgruppen-terminierten Polymere der Formel (I), Amingruppen-terminierten Polymere der Formel (XI), (XI') oder (XI") und (Meth)acrylatgruppen-terminierten Polymere der Formel (XII) oder (XII'), können als Mittel zur Erhöhung der Schlagzähigkeit einer Polymermatrix verwendet werden und sind als sogenannte Schlagzähigkeitsmodifikatoren einsetzbar.

Vorzugsweise sind die Carboxylgruppen-terminierten Polymere der Formel (II) und Endgruppen-terminierten Polymere der Formel (XV), insbesondere Epoxidgruppen-terminierten Polymere der Formel (I), Amingruppen-terminierten Polymere der Formel (XI), (XI') oder (XI") und (Meth)acrylatgruppen-terminierten Polymere der Formel (XII) oder (XII'), bei Raumtemperatur flüssig oder viskos bis hochviskos. Bevorzugt sind sie zumindest bei einer Temperatur von 60°C mit den üblichen Mitteln verarbeitbar. Meist bevorzugt sind sie zumindest bei 60°C giessbar oder zumindest von honigartiger Konsistenz. Falls sie hochviskos oder fest sind können sie gegebenenfalls in Lösungsmittel oder Harzen, wie Epoxid-Flüssigharzen gelöst, emulgiert oder dispergiert werden.

Diese Polymeren der Formel (I), (II), (XI), (XI'), (XI"), (XII) und (XII') werden vorzugsweise in vernetzenden Zusammensetzungen verwendet, insbesondere in Systemen, in welche diese Polymere einreagieren können. Somit ist die Frage, in welchen Zusammensetzungen diese Polymere eingesetzt werden, insbesondere abhängig von der Polymermatrix. So werden (Meth)acrylatgruppen-terminierten Polymere der Formel (XII) oder (XII') insbesondere in (Meth)acrylaten oder ungesättigten Polyesterharzen, welche über eine Radikal oder UV-Licht initiierte Polymerisationsreaktion zu einer Polymermatrix vernetzen, bevorzugt eingesetzt.

Epoxidgruppen-terminierte Polymere der Formel (I) sowie Carboxylgruppen-terminierte Polymere der Formel (II) und Amingruppenterminierte Polymere der Formel (XI), (XI') oder (XI") werden bevorzugt in Epoxidharzzusammensetzungen eingesetzt.

Im Falle der Epoxidgruppen-terminierten Polymere der Formel (I) werden sie vorzugsweise in der Komponente eingesetzt, in welcher ein Epoxidharz **A** vorhanden ist. Das Epoxidharz **A** kann ein Epoxid-Flüssigharz der Formel (IX) oder ein Epoxid-Festharz der Formel (VIII) sein. In einer Ausführungsform weist die Zusammensetzung neben einem Epoxidharz A einen Härter **B** für Epoxidharze, welcher durch erhöhte Temperatur aktiviert wird, auf. Derartige Zusammensetzungen werden insbesondere als hitzehärtende Epoxidharzklebstoffe eingesetzt und härten beim Erhitzen auf eine Temperatur, welche über der Hitzeaktivierung des thermisch aktivierbaren Härters **B** liegt, aus, so dass eine ausgehärtete Zusammensetzung entsteht.

Im Falle der Carboxylgruppen-terminierten Polymere der Formel (II), können sie ebenfalls in der Komponente eingesetzt werden, in welcher ein Epoxidharz **A** vorhanden ist.

Im Falle der Carboxylgruppen-terminierten Polymere der Formel (II) oder der Amingruppen-terminierten Polymere der Formel (XI), (XI') oder (XI") können sie jedoch auch in einer Härterkomponente eingesetzt werden. Eine derartige Härterkomponente enthält einen Härter für Epoxidharze, wie beispielsweise Polyamine oder Polymercaptane. Durch die Vermischung der zwei Komponenten reagieren diese, insbesondere auch bei Raumtemperatur, miteinander und es entsteht eine ausgehärtete Zusammensetzung.

Derartige Zusammensetzungen lassen sich breit anwenden. Beispiele hierfür sind Klebstoffe, Dichtstoffe, Beschichtungen, Schäume, Strukturschäume, Lacke, Injektionsharze oder Beläge. Sie können beispielsweise im Hoch- oder Tiefbau, in der Fertigung oder Reparatur von industriellen Gütern oder Konsumgütern verwendet werden. Insbesondere bevorzugt werden sie als Klebstoffe verwendet, insbesondere für den Karosseriebau und der Fertigung von Fenstern, Haushaltmaschinen oder Transportmitteln, wie Fahrzeugen zu Wasser oder zu Lande, bevorzugt Automobile, Busse, Lastkraftwagen, Züge oder Schiffe; oder als Dichtstoff zum Abdichten von Fugen, Nähten oder Hohlräumen in der industriellen Fertigung oder Reparatur verwendet.

Insbesondere bevorzugt werden derartige Zusammensetzungen als crashfeste Klebstoffe insbesondere für den Transportmittelbau, bevorzugt im OEM-Bereich von Transportmittelbau, eingesetzt.

Weiterhin bevorzugt werden derartige Zusammensetzungen als hochstrukturelle Klebstoffe für den Hoch- und Tiefbau oder als hochbelastbare Industriebeschichtungen, eingesetzt.

### Beispiele

### Verwendete Rohstoffe

| | |
|---|---|
| Hycar® CTBN 1300X13: | Säurezahl = 32 mg/g KOH = 570 meq/kg Mw = ca. 3150 g/mol |
| D.E.R. 331 (Bisphenol-A-Diglycidylether="BADGE"): | 5.40 eq/kg Mw = ca. 185 g/eq |
| Epilox F-17-00 (Bisphenol-F-Diglycidylether="BFDGE"): | 5.88 eq/kg Mw = ca. 170 g/eq |
| Eurepox RV-H (1,6-Hexandiol-diglycidylether="HDDGE"): | 6.94 eq/kg |
| Bisphenol-A: Mw = 228.3 g/mol | |

### Herstellung von Carboxylgruppen-terminierten Polymeren

### Mit BADGE vorverlängert

300.0 g (171 meq COOH) Carboxylgruppen-terminiertes Acrylnitril-/ Butadien Copolymer (Hycar® CTBN 1300X13) und 7.9 g D.E.R. 331 (42.8 meq Epoxy) wurden in einen Planschliffkolben mit Rührer, Stickstoffeinleitung und Vakuumanschluss eingewogen. Das Gemisch wurde unter leichtem Vakuum während 3h bei 180°C gerührt. Somit konnte eine viskose Masse mit einer Säurezahl von etwa 23.4 mg/g KOH (ca. 416 meq/kg) erhalten werden. Das so erhaltene Produkt wurde als ***CTBN1*** bezeichnet.

### Mit HDDGE vorverlängert

300.0 g (171 meq COOH) Carboxylgruppen-terminiertes Acrylnitril-/ Butadien Copolymer (Hycar® CTBN 1300X13) und 4.42 g Eurepox RV-H (28.5 meq Epoxy) wurden in einen Planschliffkolben mit Rührer, Stickstoffeinleitung und Vakuumanschluss eingewogen. Das Gemisch wurde unter leichtem Vakuum während 4h bei 180°C gerührt. Somit konnte eine viskose Masse mit einer Säurezahl von etwa 26.3 mg/g KOH (ca. 468 meq/kg) erhalten werden. Das so erhaltene Produkt wurde als ***CTBN2*** bezeichnet.

### Herstellung von Epoxidgruppen-terminierten Polymere

### Mit BFDGE terminiert

100.0 g (ca. 41.6 meq COOH) ***CTBN1*** und 150.0 g (882 meq Epoxy) Epilox F 17-00 wurden in einen Planschliffkolben mit Rührer, Stickstoffeinleitung und Vakuumanschluss eingewogen. Das Gemisch wurde während 3h bei 180°C unter leichtem Vakuum gerührt, bis ein viskoses Epoxidharz mit einem Epoxidgehalt von ca. 3.36 eq/kg erhalten wurde. Das so erhaltene Produkt wurde als ***ETBN1*** bezeichnet.

### Mit BADGE terminiert

100.0 g (ca. 46.8 meq COOH) ***CTBN2*** und 150.0 g (810 meq Epoxy) D.E.R. 331 wurden in einen Planschliffkolben mit Rührer, Stickstoffeinleitung und Vakuumanschluss eingewogen. Das Gemisch wurde während 3h bei 180°C unter leichtem Vakuum gerührt, bis ein viskoses Epoxidharz mit einem Epoxidgehalt von ca. 3.05 eq/kg erhalten wurde. Das so erhaltene Produkt wurde als ***ETBN2*** bezeichnet

### Mit Bisphenol-A nachverlängertes ETBN1

150.0 g (ca. 504 meq Epoxy) ***ETBN1*** und 7.5g (ca. 65 meq OH) Bisphenol-A wurden in einen Planschliffkolben mit Rührer, Stickstoffeinleitung und Vakuumanschluss eingewogen. Das Gemisch wurde während 3h bei 180°C unter leichtem Vakuum gerührt, bis ein viskoses Epoxidharz mit einem Epoxidgehalt von ca. 2.78 eq/kg erhalten wurde. Das so erhaltene Produkt wurde als ***ETBN3*** bezeichnet

### Wirkung als Schlagzähigkeitsmodifikatoren

Die Epoxidgruppen-terminiertes Polymere ***ETBN1*** und ***ETBN2*** und ***ETBN 3*** zeigten in hitzehärtenden Epoxidharzklebstoffen eine markante Erhöhung der Schlagzähigkeit.

## Patentansprüche

1. Epoxidgruppen-terminiertes Polymer der Formel (I) 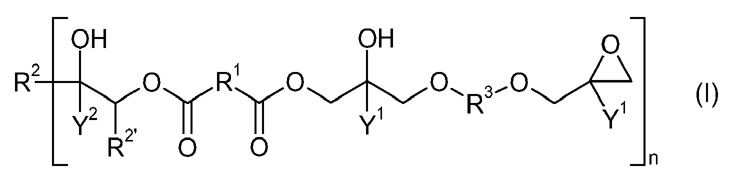 wobei R¹ für einen divalenten Rest eines Carboxylgruppen-terminierten Butadien/Acrylonitril-Copolymers **CTBN** nach Entfernung der terminalen Carboxylgruppen steht; und
R² für ein Polyepoxid **PEP** nach Entfernung von n Epoxid-Gruppen steht; R²' für H oder für einen mit R² verbundenen Rest steht;
R³ für einen Diglycidylether **DGE** nach Entfernung der zwei Glycidylether-Gruppen steht;
Y¹ und Y² unabhängig voneinander für H oder Methyl stehen;
n für einen Wert von 2 bis 4, insbesondere von 2, steht.

2. Epoxidgruppen-terminiertes Polymer gemäss Anspruch 1, **dadurch gekennzeichnet, dass** R¹ die Formel (IV) aufweist 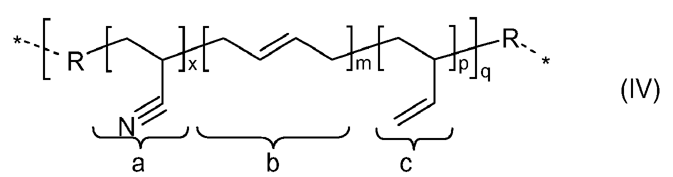 wobei die gestrichelten Linien die Anbindungsstellen der zwei Carboxylgruppen darstellen;
b und c die Strukturelemente, welche von Butadien stammen, und a das Strukturelement, welches von Acrylonitril stammt, darstellen;
R für einen linearen oder verzweigten Alkylenrest mit 1 bis 6 C-Atomen, insbesondere mit 4 C-Atomen, welcher gegebenenfalls mit ungesättigten Gruppen substituiert ist, steht;
q ein Wert von 40 bis 100, insbesondere von 50 bis 90, darstellt;
x = 0.05 - 0.3, m = 0.5 - 0.8, p = 0.1 - 0.2;
unter der Voraussetzung, dass x + m + p = 1 ist.

3. Epoxidgruppen-terminiertes Polymer gemäss Anspruch 1 oder 2, **dadurch gekennzeichnet, dass** R² die Formel (V) oder (V') aufweist 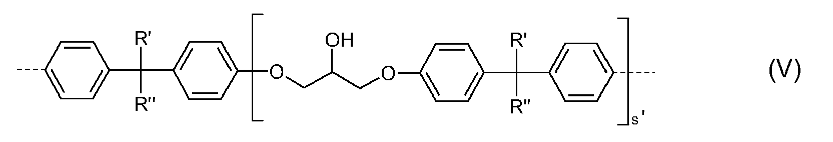 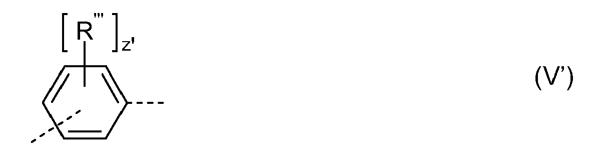 wobei R', R" und R'" unabhängig voneinander für H, Methyl oder Ethyl stehen, z' für 0 oder 1 steht und s' für 0 oder für einen Wert von 0.1 - 12 steht.

4. Epoxidgruppen-terminiertes Polymer gemäss Anspruch 3, **dadurch gekennzeichnet, dass** das Polyepoxid **PEP** Bisphenol-A-Diglycidylether ist.

5. Epoxidgruppen-terminiertes Polymer gemäss Anspruch 1 oder 2, **dadurch gekennzeichnet, dass** das Polyepoxid **PEP** ein aliphatischer oder cycloaliphatischer Polyglycidylether, bevorzugt ein aliphatischer oder cycloaliphatischer Diglycidylether, insbesondere ein Diglycidylether der Formel (V") oder (V'''), ist 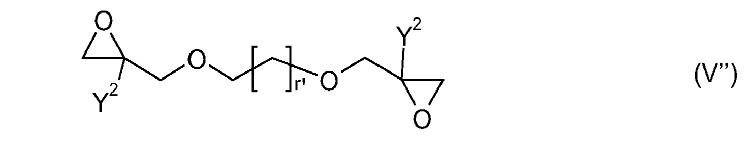 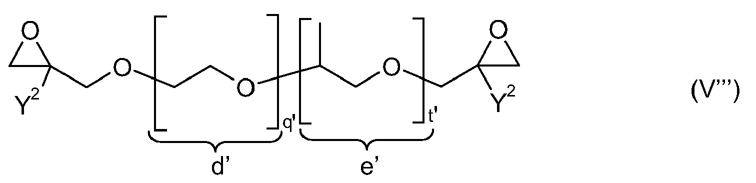 wobei r' für einen Wert von 1 bis 9 steht und
d' das Strukturelement, welches von Ethylenoxid stammt, und e' das Strukturelement, welches von Propylenoxid stammt, darstellen;
q' für einen Wert von 0 bis 10 und t' für einen Wert von 0 bis 10 steht, mit der Massgabe, dass die Summe von q' und t' ≥ 1 ist.

6. Epoxidgruppen-terminiertes Polymer gemäss Anspruch 5, **dadurch gekennzeichnet, dass** das Polyepoxid **PEP** Ethylenglykoldiglycidylether, Butandioldiglycidylether oder Hexandioldiglycidylether ist.

7. Epoxidgruppen-terminiertes Polymer gemäss einem der Ansprüche 1 - 6,
**dadurch gekennzeichnet, dass** R³ die Formel (VI) oder (VI') aufweist 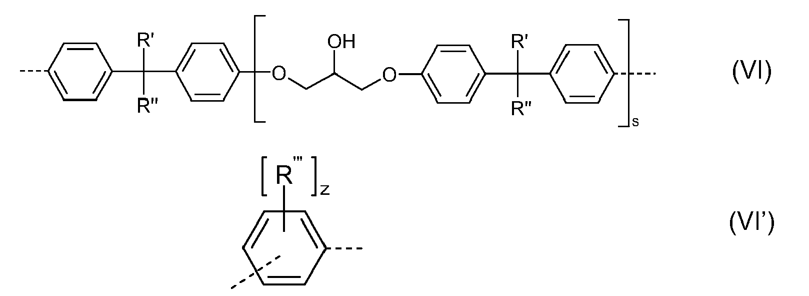 wobei R', R" und R'" unabhängig voneinander für H, Methyl oder Ethyl stehen, z für 0 oder 1 steht und s für 0 oder für einen Wert von 0.1 - 12 steht.

8. Epoxidgruppen-terminiertes Polymer gemäss einem der Ansprüche 1 bis 6, **dadurch gekennzeichnet, dass** der Diglycidylether **DGE** Bisphenol-F-Diglycidylether ist.

9. Epoxidgruppen-terminiertes Polymer gemäss einem der Ansprüche 1 bis 6, **dadurch gekennzeichnet, dass** der Diglycidylether **DGE** ein aliphatischer oder cycloaliphatischer Diglycidylether ist, insbesondere ein Diglycidylether der Formel (VI") oder (VI"') ist 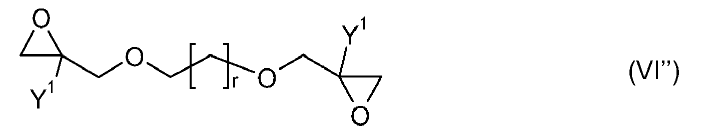 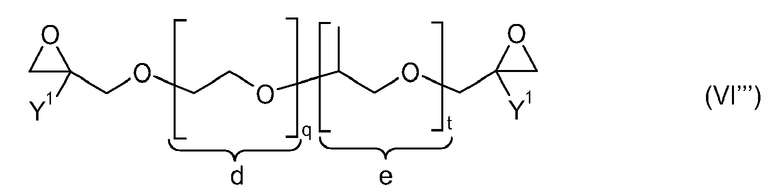 wobei r für einen Wert von 1 bis 9 steht und
d das Strukturelement, welches von Ethylenoxid stammt, und e das Strukturelement, welches von Propylenoxid stammt, darstellen;
q für einen Wert von 0 bis 10 und t für einen Wert von 0 bis 10 steht, mit der Massgabe, dass die Summe von q und t ≥ 1 ist.

10. Epoxidgruppen-terminiertes Polymer gemäss Anspruch 9, **dadurch gekennzeichnet, dass** der Diglycidylether **DGE** Ethylenglykoldiglycidylether, Butandioldiglycidylether oder Hexandioldiglycidylether ist.

11. Carboxylgruppen-terminiertes Polymer der Formel (II) 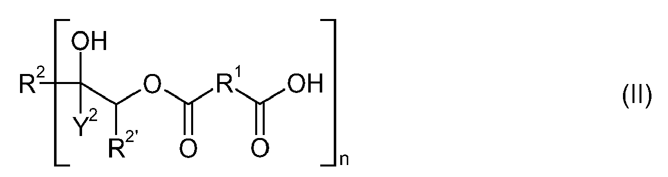 wobei R¹ für einen divalenten Rest eines Carboxylgruppen-terminierten Butadien/Acrylonitril-Copolymers **CTBN** nach Entfernung der terminalen Carboxylgruppen steht;
R² für ein Polyepoxid **PEP** nach Entfernung von n Epoxid-Gruppen steht; R²' für H oder für einen mit R² verbundenen Rest steht;
Y² für H oder Methyl steht und
n für einen Wert von 2 bis 4, bevorzugt 2 steht.

12. Carboxylgruppen-terminiertes Polymer gemäss Anspruch 11, **dadurch gekennzeichnet, dass** R¹ die Formel (IV) aufweist 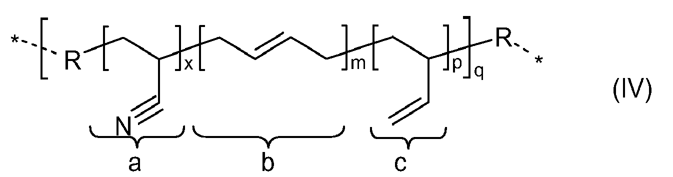 wobei die gestrichelten Linien die Anbindungsstellen der zwei Carboxylgruppen darstellen;
b und c die Strukturelemente, welche von Butadien stammen, und a das Strukturelement, welches von Acrylonitril stammt, darstellen;
R für einen linearen oder verzweigten Alkylenrest mit 1 bis 6 C-Atomen, insbesondere mit 4 C-Atomen, welcher gegebenenfalls mit ungesättigten Gruppen substituiert ist, steht;
q ein Wert von 40 bis 100, insbesondere von 50 bis 90, darstellt;
x = 0.05 - 0.3, m = 0.5 - 0.8, p = 0.1 - 0.2;
unter der Voraussetzung, dass x + m + p = 1 ist.

13. Amingruppen-terminiertes Polymer der Formel (XI) oder (XI') oder (XI") 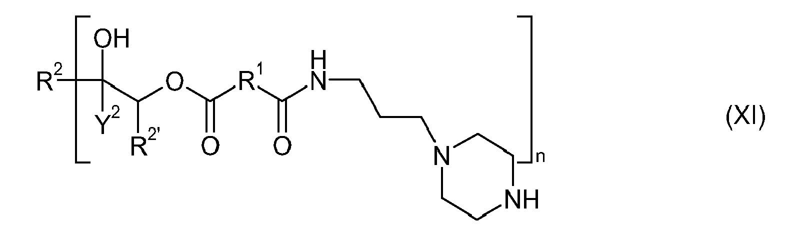 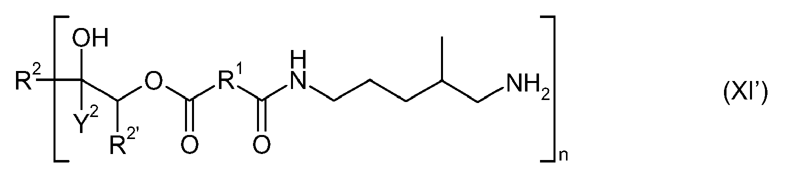 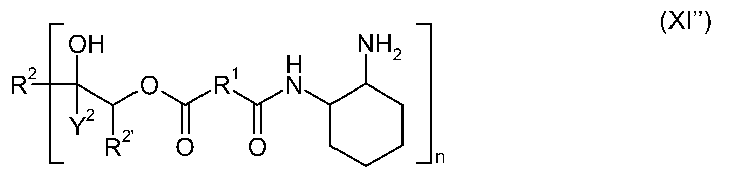 wobei R¹ für einen divalenten Rest eines Carboxylgruppen-terminierten Butadien/Acrylonitril-Copolymers **CTBN** nach Entfernung der terminalen Carboxylgruppen steht;
R² für ein Polyepoxid **PEP** nach Entfernung von n Epoxid-Gruppen steht; R²' für H oder für einen mit R² verbundenen Rest steht;
Y² für H oder Methyl steht und
n für einen Wert von 2 bis 4, bevorzugt 2 steht.

14. (Meth)acrylatgruppen-terminiertes Polymer der Formel (XII) oder (XII') 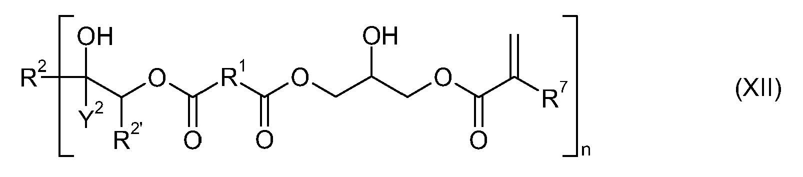 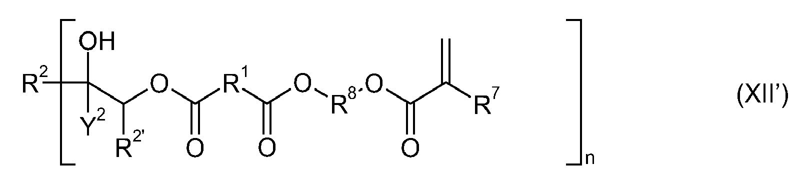 wobei R¹ für einen divalenten Rest eines Carboxylgruppen-terminierten Butadien/Acrylonitril-Copolymers **CTBN** nach Entfernung der terminalen Carboxylgruppen steht;
R² für ein Polyepoxid **PEP** nach Entfernung von n Epoxid-Gruppen steht; R^{2'} für H oder für einen mit R² verbundenen Rest steht;
Y² für H oder Methyl steht; R⁷ für H oder Methyl steht;
R⁸ für einen divalenten Resten, insbesondere für einen Alkylen-, Cycloalkylen- oder (Poly)oxyalkylen-Resten, steht und
n für einen Wert von 2 bis 4, bevorzugt 2 steht.

15. Verfahren zur Herstellung eines Carboxylgruppen-terminierten Polymers gemäss Anspruch 11 oder 12 durch eine Umsetzung eines Polyepoxides **PEP** mit einem Carboxylgruppen-terminierten Butadien/Acrylonitril-Copolymers **CTBN** der Formel HOOC-R¹-COOH, **dadurch gekennzeichnet, dass** für diese Umsetzung das Polyepoxid **PEP** und HOOC-R¹-COOH in einer Menge zueinander eingesetzt werden entsprechend einem stöchiometrischen Verhältnis der COOH-Gruppen zu Epoxid-Gruppen [COOH] / [ 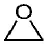 ] von ≥ 2.

16. Verfahren zur Herstellung eines Epoxidgruppen-terminierten Polymers gemäss einem der Ansprüche 1 bis 10 durch eine Umsetzung eines Carboxylgruppen-terminierten Polymers der Formel (II) gemäss Anspruch 11 oder 12 mit einem Diglycidylether **DGE** der Formel (III), **dadurch gekennzeichnet, dass** für diese Umsetzung das Polymer der Formel (II) und der Diglycidylether der Formel (III) in einer Menge zueinander eingesetzt werden entsprechend einem stöchiometrischen Verhältnis der Glycidylether-Gruppen zu COOH-Gruppen 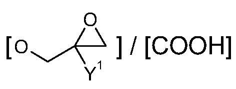 von ≥ 2.

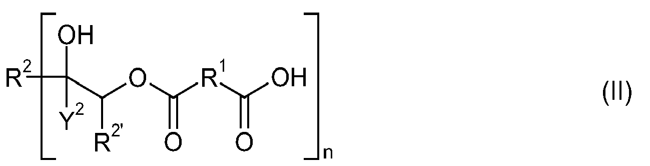

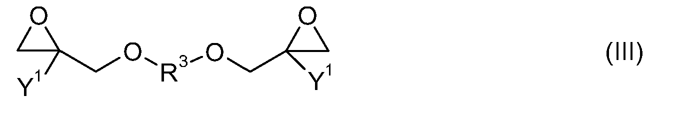

17. Verfahren zur Herstellung eines Endgruppen-terminierten Polymers der Formel (XV) 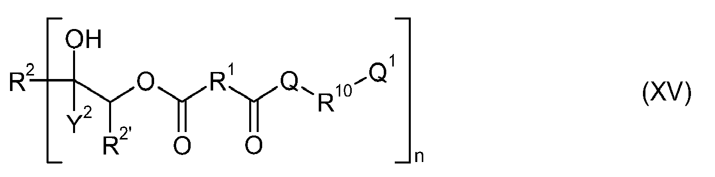 umfassend die folgenden zwei Schritte
a) Vorverlängerung, d.h. Umsetzung eines Polyepoxides **PEP** mit einem stöchiometrischen Überschuss eines Carboxylgruppen-terminierten Butadien/Acrylonitril-Copolymers **CTBN** der Formel HOOC-R¹-COOH zu einem Carboxylgruppen terminierten Polymer der Formel (II) gemäss Anspruch 11 oder 12, derart, dass das Polyepoxid **PEP** und HOOC-R¹-COOH in einer Menge zueinander eingesetzt werden, dass das Verhältnis der COOH-Gruppen zu Epoxid-Gruppen [COOH] / [ 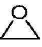 ] ≥ 2 ist;
wobei das Polyepoxid **PEP** und das Carboxylgruppen-terminierte Butadien/Acrylonitril-Copolymer **CTBN** der Formel HOOC-R¹-COOH wie in den Ansprüchen 1 bis 10 beschrieben, zu wählen sind;
b) Terminierung, d.h. Umsetzung eines Carboxylgruppen-terminierten Polymers der Formel (II) mit einem Diglycidylether oder mit einem Diamin oder mit einem (Meth)acrylat-funktionellen Alkohol oder mit einem Glycidylether-funktionellen (Meth)acrylat derart, dass der Diglycidylether oder das Diamin oder der (Meth)acrylat-funktionelle Alkohol oder das Glycidylether-funktionelle (Meth)acrylat und das Carboxylgruppen-terminierte Polymers der Formel (II) in einer Menge entsprechend einem Molekül Diglycidylether oder Diamin oder (Meth)acrylat-funktioneller Alkohol oder Glycidyletherfunktionelles (Meth)acrylat pro COOH-Gruppe eines Moleküls Carboxylgruppen-terminierten Polymers der Formel (II) zueinander eingesetzt werden;
wobei in Formel (XV) R¹⁰ für einen divalenten Rest steht und Q¹ eine Endgruppe ist, welche ausgewählt ist aus der Gruppe bestehend aus der Formel (XVI), (XVI'), (XVI") und -NH₂ 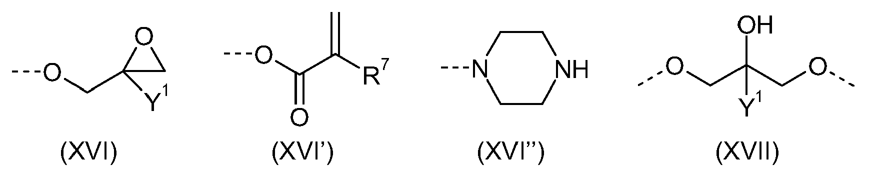 mit der Massgabe, dass
Q für -NH- steht für den Fall,
in dem Q¹ für -NH₂ oder die Formel (XVI") steht, und
Q für -O- oder die Formel (XVII) steht für den Fall,
in dem Q¹ für die Formel (XVI') steht, und
Q für die Formel (XVII) steht für den Fall,
in dem Q¹ für die Formel (XVI) steht.

18. Verwendung eines Carboxylgruppen-terminierten Polymers der Formel (II) gemäss Anspruch 11 oder 12, eines Endgruppen-terminierten Polymers der Formel (XV), hergestellt nach einem Verfahren gemäss Anspruch 17, insbesondere eines Epoxidgruppen-terminiertes Polymers der Formel (I) gemäss einem der Ansprüche 1 - 10 oder eines Amingruppen-terminierten Polymers der Formel (XI) oder (XI') oder (XI") gemäss Anspruch 13 oder eines (Meth)acrylatgruppen-terminierten Polymers der Formel (XII) oder (XII') gemäss Anspruch 14, als Mittel zur Erhöhung der Schlagzähigkeit einer Polymermatrix.

19. Verwendung gemäss Anspruch 18, **dadurch gekennzeichnet, dass** die Polymermatrix eine Epoxidharzmatrix ist.

20. Zusammensetzung enthaltend ein Amingruppen-terminiertes Polymer der Formel (XI) oder (XI') oder (XI") gemäss Anspruch 13 oder ein (Meth)acrylatgruppen-terminiertes Polymer der Formel (XII) oder (XII') gemäss Anspruch 14.

21. Zusammensetzung enthaltend ein Epoxidgruppen-terminiertes Polymer der Formel (I) gemäss einem der Ansprüche 1 - 10 oder ein Carboxylgruppen-terminiertes Polymers der Formel (II) gemäss Anspruch 11 oder 12.

22. Zusammensetzung gemäss Anspruch 21, **dadurch gekennzeichnet, dass** die Zusammensetzung weiterhin mindestens ein Epoxidharz **A** enthält.

23. Zusammensetzung gemäss Anspruch 22, **dadurch gekennzeichnet, dass** die Zusammensetzung weiterhin einen Härter **B** für Epoxidharze, welcher durch erhöhte Temperatur aktiviert wird, enthält.

24. Ausgehärtete Zusammensetzung erhalten aus einer Zusammensetzung gemäss Anspruch 22 und einer Beimischung eines Härters für Epoxidharze.

25. Ausgehärtete Zusammensetzung erhalten aus Erhitzung einer Zusammensetzung gemäss Anspruch 23 auf eine Temperatur, welche über der Hitzeaktivierung des thermisch aktivierbaren Härters **B** liegt.
